# EUROPEAN PATENT APPLICATION

(11) **EP 3 572 185 A1**
(43) Date of publication of application: **27.11.2019**
(21) Application number: 18196822.3
(22) Date of filing: 26.09.2018
(51) Int. Cl.: B23Q 11/10

(54) **WASTE COLLECTING APPARATUS AND WORKPIECE PROCESSING SYSTEM**

(30) Priority: 24.05.2018 CN 201810507490
(71) Applicant: Beijing Apollo Ding Rong Solar Technology Co., Ltd., Beijing 100176 (CN)
(72) Inventor: Gao, Junzhao, Beijing, 100176 (CN)
(74) Representative: Rupprecht, Kay

(57) **Abstract**

A waste collecting apparatus and a workpiece processing system, relating to the field of machining processes, are provided. The waste collecting apparatus includes: a collecting body; a feeding pipe and a liquid discharging pipe in communication with the collecting body; and a separating mechanism provided within the collecting body, the separating mechanism is configured to be passed by a liquid waste and retain a solid waste. By the provision of a separate mechanism, the waste can be subjected to a solid-liquid separation, a liquid waste can be obtained from the liquid discharging pipe, and a solid waste can be obtained from the collecting body. The solid-liquid separation process is no longer required upon subsequent central process of the waste. Moreover, since the collecting body retains only the solid waste, the time interval for centrally processing the waste increases, allowing a reduction in labor intensity and an improvement of work efficiency.

## Description

### Technical Field

The present disclosure relates to the field of machining processes, and in particular to a waste collecting apparatus and a workpiece processing system.

### Background

A machining process procedure usually involves cutting or drilling a workpiece by a cutter (tool), and also requires injection of cooling water into a position that is cut or drilled on the workpiece, so as to avoid damage to the cutter caused by excessive temperature. In this case, the above process produces a waste including a solid residue (generated by the workpiece) and a liquid waste. In order to avoid the waste from disturbing with the work environment, it is necessary to collect the waste for a centralized process.

The prior art has at least the following problems:
the machine needs to be stopped frequently during the workpiece machining process in order to process the waste collecting box, which increases the labor intensity and reduces the work efficiency.

### Summary

An embodiment of the present disclosure provides a waste collecting apparatus and a workpiece processing system, where the machine does not need to be stopped frequently during the workpiece machining process procedure in order to process the waste collecting box, and the waste collecting apparatus may perform a solid-liquid separation to the waste, which reduces labor intensity and improves the work efficiency.

The embodiment of the present disclosure may be implemented by the technical solutions as follows:
in a first aspect, an embodiment of the present disclosure provides a waste collecting apparatus, where the waste collecting apparatus includes: a collecting body;
a feeding pipe and a liquid discharging pipe in communication with the collecting body; and
a separating mechanism provided within the collecting body, with the separating mechanism configured to be passed by a liquid waste and retain a solid waste.

Optionally, the separating mechanism includes: a waste aggregating (collecting) chamber in communication with the feeding pipe and configured to receive a waste;
the separating mechanism is provided on a wall with a filtering structure configured to be passed by a liquid waste and retain a solid waste.

Optionally, the filtering structure includes: at least one hole provided on a wall of the separating mechanism.

Optionally, a first opening is provided on a wall of the separating mechanism, and the filtering structure includes: a filter provided within the first opening.

Optionally, the filter is fixed within the first opening by a pressing member, the pressing member is a ring sheet provided surrounding the first opening, the pressing member is configured to press the filter onto the wall of the separating mechanism, and the pressing member and the wall of the separating mechanism are connected by a bolt assembly.

Optionally, the separating mechanism is provided inside the collecting body in a pulling-out manner.

Optionally, the separating mechanism is a filtering mesh provided at a pipe orifice of the liquid discharging pipe that is connected to the collecting body, and the filtering mesh has a pore size smaller than a particle diameter of the solid waste, so that the liquid waste passes through the filtering mesh and enters the liquid discharge pipe to be discharged, and the solid waste retains in the collecting body.

Optionally, the separating mechanism is a rotatable cylinder provided within the collecting body, and a filtering structure is provided on a sidewall of the cylinder.

Optionally, the waste collecting apparatus further includes a sealing member, and the sealing member is configured to bring the separating mechanism into sealing contact with the collecting body.

Optionally, the sealing member includes a sealing ring and a pressing block, the sealing ring is provided on an inner wall of the collecting body and/or an outer wall of the separating mechanism, and the pressing block is configured to fix the separating mechanism for fixing the separating mechanism onto the collecting body.

Optionally, the waste collecting apparatus further includes: a liquid pumping device in communication with the liquid discharging pipe.

Optionally, the feeding pipe is provided at an upper portion of the collecting body, the liquid discharging pipe is provided at a lower portion of the collecting body; or the feeding pipe and the liquid discharging pipe are provided at opposite sides of the collecting body.

In a second aspect, an embodiment of the present disclosure provides a workpiece processing system including the above-described waste collecting apparatus.

Optionally, the workpiece processing system is a thin sheet workpiece drilling system.

Optionally, the workpiece processing system further includes a waste aggregating mechanism that is in communication with the collecting body through the feeding pipe, and the waste aggregating mechanism is configured to collect a waste.

Optionally, the waste aggregating mechanism includes: two waste aggregating pipes, both waste aggregating pipes having one end in communication with the feeding pipe, and the other end respectively in contact with a front face and a back face of the workpiece to be drilled;

the workpiece processing system further includes: a first drilling member and a second drilling member respectively located in the two waste aggregating pipes; and

a first water inlet pipe and a second water inlet pipe respectively in communication with the two waste aggregating pipes.

The beneficial effects brought about by the technical solutions provided by the present disclosure include at least as follows:

Since the separating mechanism in the collecting body can be passed by a liquid waste and retain a solid waste. After entering the collecting body, the waste is subjected to a solid-liquid separation under an action of the separating mechanism, where the liquid waste may be continuously discharged from the collecting body, and the solid waste is retained and aggregated in the collecting body to be centrally processed periodically, without a separate solid-liquid separation process. Moreover, since the collecting body retains only the solid waste, the time interval for centrally processing the waste increases, allowing a reduction in labor intensity and an improvement of work efficiency.

### Brief Description of Drawings

Drawings required for use in the description of embodiments will be introduced briefly below in order to explain the technical solutions of the embodiments of the present disclosure more clearly, and it will be apparent that the drawings described below are merely illustrative of some embodiments of the present disclosure and those skilled in the art would also obtain, from these drawings, other drawings without inventive efforts.
Fig. 1 is a schematic structural view of a first waste collecting apparatus provided by an embodiment of the present disclosure from one perspective;
Fig. 2 is a schematic structural view of a first waste collecting apparatus provided by an embodiment of the present disclosure from another perspective;
Fig. 3 is a schematic structural view of a second waste collecting apparatus provided by an embodiment of the present disclosure;
Fig. 4 is a schematic structural view of a first separating mechanism provided by an embodiment of the present disclosure;
Fig. 5 is a schematic structural view of a second separating mechanism provided by an embodiment of the present disclosure from one perspective;
Fig. 6 is a schematic structural view of a second separating mechanism provided by an embodiment of the present disclosure from another perspective;
Fig. 7 is a schematic structural view of a third waste collecting apparatus provided by an embodiment of the present disclosure;
Fig. 8 is a schematic structural view of a fourth waste collecting apparatus provided by an embodiment of the present disclosure; and
Fig. 9 is a schematic structural view of a workpiece processing system provided by an embodiment of the present disclosure.

List of reference signs: 1 collecting body; 101 receiving chamber; 102 third opening; 2 feeding pipe; 3 liquid discharging pipe; 4 separating mechanism; 41 waste aggregating chamber; 42 first opening; 43 filtering mesh; 44 second opening; 45 handle; 5 filtering structure; 51 hole; 52 filter; 53 pressing member; 54 bolt assembly; 6 liquid pumping device; 7 waste aggregating mechanism; 701 waste aggregating pipe; 8 first drilling member; 9 second drilling member; 10 first water inlet pipe; 11 second water inlet pipe; X thin sheet workpiece to be drilled; 12 sealing member; 121 sealing ring; 122 pressing block; 1221 locking base; 1222 locking member; and 13 waste liquid collecting container.

### Detailed Description of Embodiments

In order to make the objects, technical solutions and advantages of the embodiments of the present disclosure clearer, the technical solutions of the embodiments in the present disclosure will be clearly and completely described in the following with reference to the accompanying drawings in the present disclosure, and it is apparent that the described embodiments are some but not all of the embodiments of the present disclosure. The components of the present disclosure, which are generally described and illustrated in the figures herein, may be arranged and designed in a variety of different configurations.

Therefore, the detailed description of the present disclosure set forth in the accompanying drawings is not intended to limit the scope of the present disclosure, but illustrate only selected embodiments of the present disclosure. All the other embodiments, obtained by those skilled in the art in light of the embodiments of the present disclosure without inventive efforts, will fall within the claimed scope of the present disclosure.

It should be noted that similar reference numerals and alphabets indicate similar items in the following drawings, and therefore, once an item is defined in a drawing, it is not necessary to further define or explain the item in the subsequent drawings.

In the description of the present disclosure, it should be indicated that orientation or positional relations indicated by terms such as "center", "upper", "up", "down", "left", "right", "vertical", "horizontal", "inside", and "outside" are based on the orientation or positional relations as shown in the drawings, or the orientation or positional relationship that the invention product is conventionally placed in use, and are only for facilitating description of the present disclosure and simplifying the description, rather than indicating or implying that the referred apparatus or elements must be in a particular orientation or constructed or operated in the particular orientation, and therefore they should not be construed as limiting the present disclosure.

In addition, terms such as "first", "second", and "third" if present are used only for distinguishing the description, and should not be understood as indicating or implying to have importance in relativity.

In addition, if present, the terms "horizontal", "vertical", "overhanging", etc. are not intended to mean that the component is absolutely horizontal or overhanging, but may be slightly inclined. For example, the term "horizontal" merely means that its direction is more horizontal with respect to "vertical", and does not mean that the structure must be completely horizontal, but may be slightly inclined.

In the description of the present disclosure, it should be indicated that unless otherwise expressly specified or defined, if present, terms "provide", "mount", "couple", and "connect" should be understood broadly, and for example, a connection may be a fixed connection, or a detachable connection, or an integrated connection; may be a mechanical connection or an electric connection; or may be a direct connection, or an indirect connection via an intermediate medium, or may be an internal communication between two elements. The specific meanings of the above-mentioned terms in the present disclosure would be understood by those skilled in the art according to specific situations.

It should be noted that features in the embodiments of the present disclosure may be combined with one another without conflicting.

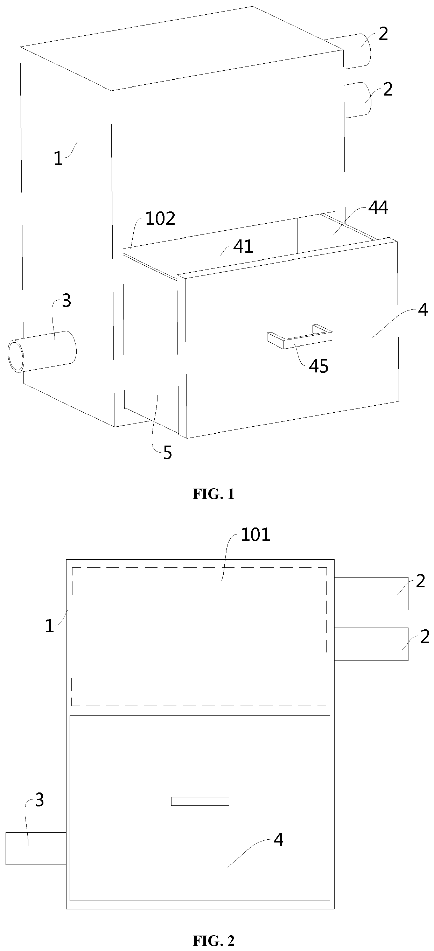

An embodiment of the present disclosure provides a waste collecting apparatus, as shown in FIG. 1, the waste collecting apparatus includes: a collecting body 1; a feeding pipe 2 and a liquid discharging pipe 3 in communication with the collecting body 1; and a separating mechanism 4 provided within the collecting body 1, and the separating mechanism 4 is configured to be passed by a liquid waste and retain a solid waste.

The following explains the working principle of the waste collecting apparatus provided by an embodiment of the present disclosure:

during the production process, a waste enters the collecting body 1 through the feeding pipe 2, and the separating mechanism 4 within the collecting body 1 can be passed by a liquid waste and retain a solid waste. After entering the collecting body 1, the waste is subjected to a solid-liquid separation under an action of the separating mechanism 4, where a liquid waste is discharged through the liquid discharging pipe 3, and a solid waste is retained in the collecting body 1, and the waste obtained from the collecting body 1 is a solid waste.

The waste collecting apparatus provided by an embodiment of the present disclosure can complete the solid-liquid separation of the waste by the provision of the separating mechanism 4, the liquid waste can be continuously discharged from the collecting body 1, and the solid waste is retained and aggregated in the collecting body 1 to be centrally processed periodically, without a separate solid-liquid separation process. Moreover, since the collecting body 1 retains only the solid waste, the time interval for centrally processing the waste increases, allowing a reduction in labor intensity and an improvement of work efficiency.

The following sets forth in various components of the waste collecting apparatus provided by an embodiment of the present disclosure and their actions respectively:
referring to Figs. 1 and 2, the collecting body 1 is a main body of the waste collecting apparatus, and includes at least a receiving chamber 101 configured to receive a separating mechanism 4, and may be, for example, a box body having a rectangular parallelepiped structure or a columnar cylinder or the like.

The feeding pipe 2 may be provided at an upper portion of the collecting body 1 and in communication with the receiving chamber 101, and the liquid discharging pipe 3 may be provided at a lower portion of the collecting body 1 and in communication with the receiving chamber 101. By doing so, the waste under action of gravity may enter the collecting body 1, and further enables a more efficient process of discharging the liquid waste through the liquid discharging pipe 3. In the present embodiment, the feeding pipe 2 and the liquid discharging pipe 3 are provided at opposite sides of the collecting body 1.

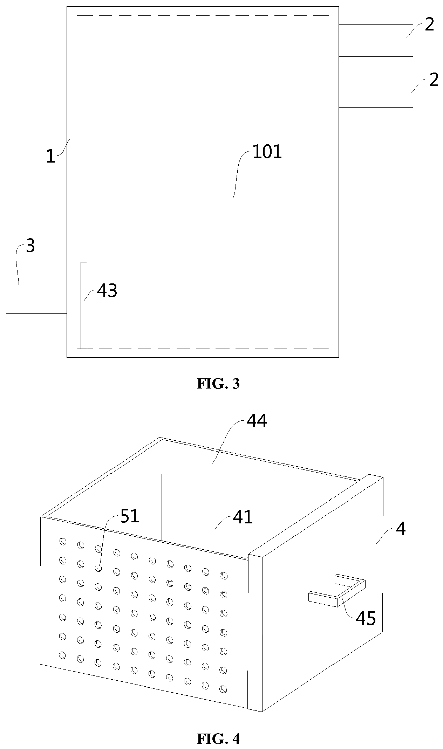

The separating mechanism 4 is configured to be passed by a liquid waste and retain a solid waste, and the structure of the separating mechanism 4 is illustrated by examples below:
referring to Fig. 3, in a possible implementation mode, the separating mechanism 4 may be a filtering mesh 43 provided at a pipe orifice of the liquid discharging pipe 3 that is connected to the collecting body 1, and the filtering mesh 43 has a pore size smaller than a particle diameter of the solid waste, so that the liquid waste may pass through the filtering mesh 43 and enter the liquid discharging pipe 3 to be discharged, and the solid waste is retained in the collecting body 1. By doing so, the separating mechanism 4 allows a simper structure and low cost.

In another possible implementation mode, the separating mechanism 4 may include: a waste aggregating chamber 41 in communication with the feeding pipe 2; and the separating mechanism 4 is provided on a wall with a filtering structure 5 configured to be passed by a liquid waste and retain a solid waste.

In connection with Figs 1 and 2, the separating mechanism 4 is provided thereon with a waste aggregating chamber 41 in communication with the feeding pipe 2, and the waste enters the collecting body 1 and then enters the waste aggregating chamber 41. The liquid waste is discharged through the filtering mechanism 5 on the wall of the separating mechanism 4 and then enters the liquid discharging pipe 3, and the solid waste is retained in the waste aggregating chamber 41. The solid waste is collected by a separating mechanism 4 provided with a waste aggregating chamber 41, so as to facilitate recycle of the solid waste.

Herein, the pipe orifice of the feeding pipe 2 located in the collecting body 1 may be aligned with an upper opening of the waste aggregating chamber 41 to bring the feeding pipe 2 in communication with the waste aggregating chamber 41. The upper opening of the waste aggregating chamber 41 is the second opening 44 shown in Fig. 1.

The structure of filtering structure 5 is illustrated by examples below:
referring to Fig. 4, as an example, the filtering structure 5 may be a hole 51 provided on the wall of the separating mechanism 4. Herein, the shape of the hole 51 may be a circle, and when the shape of the hole 51 is a circle, the diameter of the circle is smaller than a particle diameter of the solid waste. The shape of the hole 51 may also be a rectangle, a triangle or an irregular shape, etc., and the hole may have various shapes and sizes as long as the solid waste cannot pass through.

There may be one or more holes 51, and when there are a plurality of holes 51, the holes may be dispersedly distributed on the wall of the separating mechanism 4, or may be distributed centrally in a circular or square area on the wall of the separating mechanism 4.

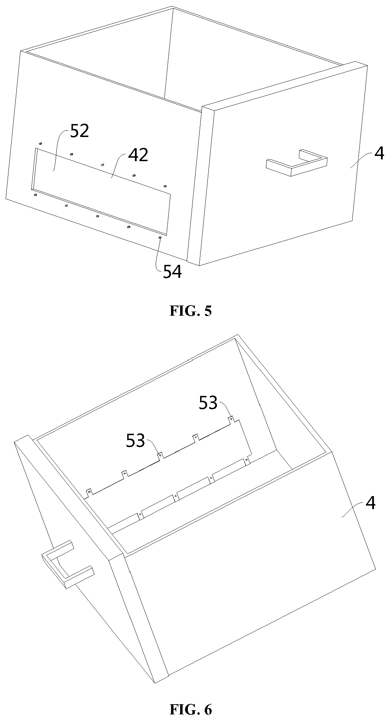

Referring to Figs. 5 and 6, as another example, a first opening 42 is provided on the wall of the separating mechanism 4, and the filtering structure 5 is a filter 52 provided within the first opening 42. By doing so, the filter 52 passes through the liquid waste and retains the solid waste. The installation of the filter 52 is facilitated by providing the first opening 42 on the wall of the separating mechanism 4.

Herein, the filter 52 may be a filtering mesh or a filtering film, and when the filter 52 is a filtering mesh, the filtering mesh has a pore size smaller than a particle size of the solid waste.

The filter 52 may be fixed within the first opening 42 by adhering, and during installation the fixation of the filter 52 may be implemented conveniently just by applying an adhesive around the filter 52.

In connection with Figs. 5 and 6, alternatively, the filter 52 may be fixed within the first opening 42 by a pressing member 53, and the pressing member 53 may be a ring sheet provided surrounding the first opening 42, when the filter 52 is installed, the first opening 42 is first blocked by the filter 52, and then the filter 52 is pressed onto the wall of the separating mechanism 4 by the pressing member 53, where the pressing member 53 and the wall of the separating mechanism 4 may be connected by a bolt assembly 54, so as to facilitate the installation and disassembly of the pressing member 53, thus facilitating the installation and disassembly of the filter 52. By doing so, on the one hand, it is convenient to replace the filter 52 when the filter 52 is damaged, on the other hand, where the solid wastes with different particle sizes are recycled, the filter 52 with different specifications may be applied to broaden the applicable range of the waste collecting apparatus.

The first opening 42 may be provided fully on a wall face of the separating mechanism 4, that is, the entire wall face of the separating mechanism 4 is the filter 52, and by doing so, the efficiency of passage of the liquid waste can be improved. Alternatively, the first opening 42 may be provided at a specific position on the wall, for example, the first opening 42 may be provided at a position on the wall of the filtering structure 5 corresponding to the liquid discharging pipe 3, so that the filtered liquid waste enters directly the liquid discharging pipe 3.

In connection with Fig. 1, a filtering structure 5 may be provided on one or more walls (including sidewalls and a bottom wall) of the waste aggregating chamber 41, and the liquid discharging pipe 3 may be provided at a position on the collecting body 1 corresponding to the filtering structure 5. For example, when the left sidewall of the waste aggregating chamber 41 is the filtering structure 5, the liquid discharging pipe 3 may be provided on the left sidewall of the collecting body 1 to reduce the flow course of the liquid waste in the collecting body 1.

After the liquid waste is discharged through the liquid discharging pipe 3, the solid waste is retained in the waste aggregating chamber 41 of the separating mechanism 4, and in order to facilitate recycle of the solid waste in the separating mechanism 4, the separating mechanism 4 is provided within the collecting body 1 in the following modes:
in connection with Fig. 1, in a first mode, a separating mechanism 4 is provided inside the collecting body 1 in a pulling-out manner. The separating mechanism 4 is provided as a drawer structure in a pulling-out manner, where the separating mechanism 4 is taken out by pulling, enabling a recycle of the solid waste in the separating mechanism 4, and after the collection is completed, the separating mechanism 4 is pushed back, continuing with the collection of the waste.

Further, the separating mechanism 4 may be provided thereon with a handle 45 for facilitating the pushing and pulling of the separating mechanism 4.

When the separating mechanism 4 is provided within the collecting body 1 in a pulling-out manner, with the direction shown in FIG. 1 as a reference, when the separating mechanism 4 is located within the collecting body 1 and operates normally, a front wall face of the separating mechanism 4 is to be in a sealing contact with a front wall face of the collecting body 1, avoiding leakage of liquid waste. Except the front wall face of the separating mechanism 4, other wall faces thereof may or may not be in contact with corresponding wall faces of the collecting body 1.

In a second mode, the bottom face of the collecting body 1 is opened, and the separating mechanism 4 is sleeved inside the collecting body 1. When the solid waste in the separating mechanism 4 needs to be recycled, the separating mechanism 4 can be taken out of the collecting body 1 by lifting the collecting body 1 or pulling down the separating mechanism 4.

When the separating mechanism 4 is sleeved inside the collecting body 1, a bottom wall of the separating mechanism 4 is in a sealing contact with a lower end of the sidewall of the collecting body 1, avoiding leakage of liquid waste.

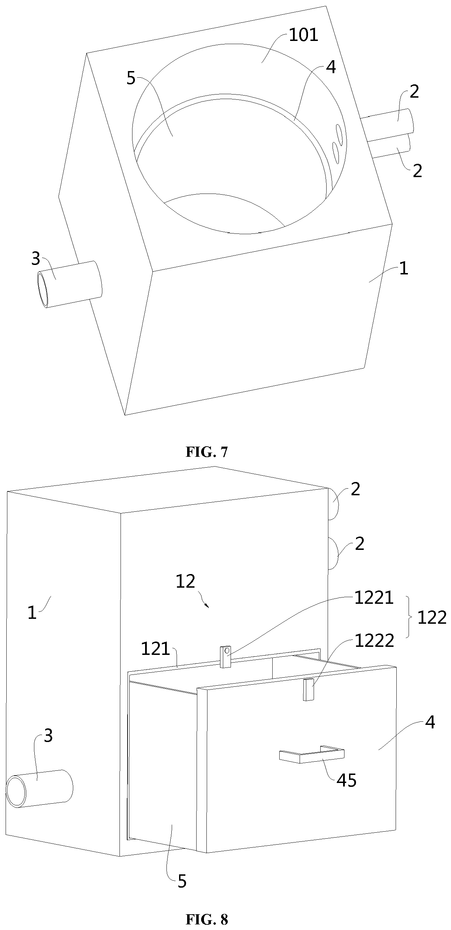

Referring to Fig. 7, in a third mode, the separating mechanism 4 may be a rotatable cylinder provided within the collecting body 1; a filtering structure 5 is provided on the sidewall of the cylinder; and when the cylinder is rotated, the liquid waste is thrown away from the cylinder under an action of a centrifugal force, which improves the efficiency of the discharge of the liquid waste.

Referring to Fig. 8, in order to avoid the leakage of the liquid waste, the collecting body 1 is provided thereon with a sealing member 12 configured to be in sealing contact with the separating mechanism 4. The sealing member 12 may include a sealing ring 121 and a pressing block 122; and the sealing ring 121 may be provided on an inner wall of the collecting body 1 and/or an outer wall of the separating mechanism 4 to improve the sealing effect. The pressing block 122 is configured to fix the separating mechanism 4 for fixing the separating mechanism 4 onto the collecting body 1, avoiding the separating mechanism from being swayed freely or detached from the collecting body 1 during the waste collecting process. The pressing block 122 is common in the art and includes a locking base 1221 and a locking member 1222, with the locking base 1221 and the locking member 1222 respectively provided on the collecting body 1 and the separating mechanism 4, and the separating mechanism 4 is fixed by position-limiting the locking member 1222 in the locking base 1221. The locking base 1221 and the locking member 1222 may be a one-way locking structure; and when the separating mechanism 4 is pushed into the collecting body 1, the locking member 1222 can enter the locking base 1221 for fixation. Moreover, the locking base 1221 may be provided thereon with a button or a snap spring etc., for unlocking the locked structure, when the separating mechanism 4 needs to be taken out of the collecting body 1, the lock member 1222 is separated from the locking seat 1221 by operating the button or the snap spring.

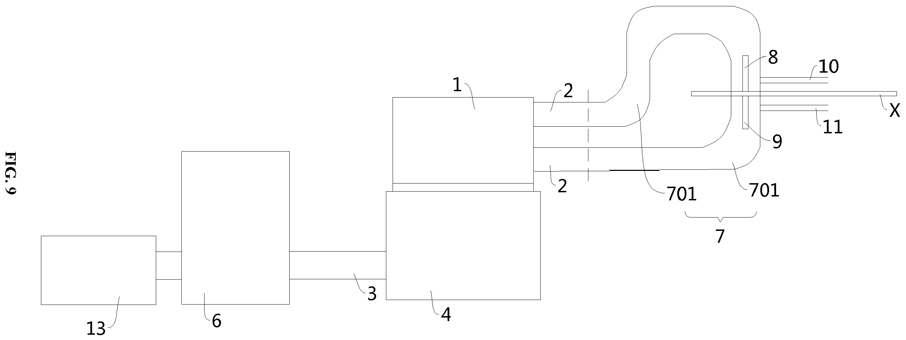

In order to improve the efficiency of the waste flow, as shown in Fig. 9, the waste collecting apparatus provided by an embodiment of the present disclosure further includes: a liquid pumping device 6 in communication with the liquid discharging pipe 3. By pumping with the pumping device 6, it is possible to improve the efficiency of discharging the liquid waste from the collecting body 1 and the passage of the waste into the collecting body 1 through the feeding pipe 2.

Two ends of the liquid pumping device 6 may be connected with the liquid discharging pipe 3 and the waste liquid collecting container 13 respectively, and the pumped liquid waste enters the waste liquid collecting container 13 for recycle. For example, the liquid pumping device 6 may be a pump or a fan.

An embodiment of the present disclosure provides a workpiece processing system including the above-described waste collecting apparatus.

By applying the above-described waste collecting apparatus to the workpiece processing system, the waste generated by the processing procedure can enter the waste collecting apparatus and subjected to a solid-liquid separation by the waste collecting apparatus, thereby facilitating sorting, recycling and processing of the waste generated by the processing procedure.

When the workpiece processing system is a thin sheet workpiece drilling system, the waste generated includes a workpiece waste residue and waste water formed after the use of the cooling water in the drilling process. The workpiece waste residue is retained in the waste aggregating chamber 41, and the waste water is discharged through the liquid discharging pipe 3. It should be noted that the workpiece processing system may also be other types of processing system.

In order to facilitate the collection of the waste generated by the processing procedure, the workpiece processing system further includes a waste aggregating mechanism 7 in communication with the collecting body 1 through the feeding pipe 2, and the waste aggregating mechanism 7 is configured to collect a waste. By the provision of the waste aggregating mechanism 7, it is possible to collect the waste generated during the processing procedure, avoiding environmental pollution and safety risks caused by the splashed waste.

As an example, the waste aggregating mechanism 7 may be a waste aggregating cover, and the waste aggregating cover may be a funnel-shaped or spherical structure; and provided surrounding the outside of the workpiece and the cutter, the waste aggregating cover performs a function of collecting waste. When the waste aggregating cover is funnel-shaped, the cutter and the workpiece may be provided in a variable diameter section of the funnel-shaped waste aggregating cover. When the waste aggregating cover has a spherical structure, the waste aggregating cover may include an upper cover body and a lower cover body. When applied, the upper cover body and the lower cover body are approaching each other from two ends where the workpiece and the cutter are located, and are closed to form a spherical waste aggregating cover, inside which the workpiece and the cutter are located.

As another example, the waste aggregating mechanism 7 includes: two waste aggregating pipes 701, both two waste aggregating pipes 701 having one end in communication with the feeding pipe 2, and the other end respectively in contact with a front face and a back face of a thin sheet workpiece to be drilled X.;
the workpiece processing system further includes: a first drilling member 8 and a second drilling member 9 respectively located in the two waste aggregating pipes 701; and
a first water inlet pipe 10 and a second water inlet pipe 11 respectively in communication with the two waste aggregating pipes 701.

By doing so, in case of drilling, the cooling water flows into the first drilling member 8 and the second drilling member 9 through the first water inlet pipe 10 and the second water inlet pipe 11 respectively, to cool the drilled portion. Since the first drilling member 8 and the second drilling member 9 are respectively located in the two waste aggregating pipes 701, the solid waste and the liquid waste generated by the drilling process enter the feeding pipe 2 through the two waste aggregating pipes 701, respectively. The solid waste enters the feeding pipe 2 through the waste aggregating pipe 701 under a washout action of the cooling water, and the entire waste collecting process is carried out in a closed space, avoiding environmental pollution and safety risks caused by the splashed waste.

Herein, the waste may flow in the waste aggregating pipe 701 under an impact action of the cooling water. Where the liquid pumping device 6 is provided, the waste may also be flowed in the waste aggregating pipe 701 under a pumping pressure provided by the liquid pumping device 6.

### In some embodiments:

Referring to Figs 1 and 2: the waste collecting apparatus shown in Fig. 1 includes a collecting body 1, a feeding pipe 2, a liquid discharging pipe 3, a separating mechanism 4, and a filtering structure 5.

Herein, the collecting body 1 has a rectangular parallelepiped structure, and has a receiving chamber 101 inside, a front lower portion of the collecting body 1 is provided with a third opening 102 in communication with the receiving chamber 101, the separating mechanism 4 has a rectangular parallelepiped structure, and is provided inside the collecting body 1 in a pulling-out manner through the third opening 102. The separating mechanism 4 includes a front sidewall, a rear sidewall, a left sidewall, a right sidewall, and a bottom wall, and the front sidewall, the rear sidewall, the left sidewall, the right sidewall, and the bottom wall are connected to each other to form a drawer structure with an opening at a side (the opening is the second opening 44 shown in Fig. 1), and a waste aggregating chamber 41 is formed inside the drawer structure. When the separating mechanism 4 protrudes into the receiving chamber 101, the front end wall face of the separating mechanism 4 is in sealing contact with the front end wall face of the collecting body 1. The left sidewall of the separating mechanism 4 is the filtering structure 5, and the front sidewall of the separating mechanism 4 is provided with a handle 45.

In Fig. 2, there are two feeding pipes 2, and the two feeding pipes are connected to the right sidewall of the collecting body 1, and the feeding pipes 2 are in communication with the receiving chamber 101, with a position height higher than a height of the second opening 44 of the separating mechanism 4, the liquid discharging pipe 3 is connected to the left sidewall of the collecting body 1 and is in communication with the receiving chamber 101, with a position height lower than a height of the second opening 44 of the separating mechanism 4, so that the waste enters the receiving chamber 101 of the collecting body 1 through the feeding pipe 2 and then passes through the second opening 44 of the separating mechanism 4 to enter the waste aggregating chamber 41 of the separating mechanism 4, and the solid waste is left in the waste aggregating chamber 41 of the separating mechanism 4 by a filtering action of the filtering structure 5, and the liquid waste passes through the filtering structure 5 and then discharged from the liquid discharging pipe 3.

The waste collecting apparatus shown in Fig. 3 includes a collecting body 1, a feeding pipe 2 and a liquid discharging pipe 3, the collecting body 1 has a receiving chamber 101, there are two feeding pipes 2 and the two feeding pipes are connected side by side to the right sidewall of the collecting body 1 and are in communication with the receiving chamber 101, the liquid discharging pipe 3 is connected to the left sidewall of the collecting body 1, and is in communication with the receiving chamber 101, and a filtering mesh 43 is provided at a pipe orifice of the liquid discharging pipe 3 that is connected to the collecting body 1, and the filtering mesh 43 has a pore size smaller than a particle diameter of the solid waste, so that the liquid waste passes through the filtering mesh 43 and enters the liquid discharging pipe 3 to be discharged, and the solid waste is retained in the collecting body 1.

The separating mechanism 4 shown in Fig. 4 includes a front sidewall, a rear sidewall, a left sidewall, a right sidewall, and a bottom wall, and the front sidewall, the rear sidewall, the left sidewall, the right sidewall, and the bottom wall are connected to each other to form a drawer structure with an opening at a side (the opening is the second opening 44 shown in Fig. 4), and a waste aggregating chamber 41 is formed inside the drawer structure, and the front sidewall of the separating mechanism 4 is provided with a handle 45, and the left sidewall of the separating mechanism 4 is provided with a plurality of holes 51, the plurality of holes 51 forming a filtering structure 5.

In the separating mechanism 4 shown in Figs 5 and 6, the left sidewall thereof is provided with a first opening 42, the first opening 42 is provided therein with a filter 52, and the filter 52 is fixed within the first opening 42 by a pressing member 53, there are a plurality of pressing members 53 and the plurality of pressing members are distributed along a circumference of the first opening 42, and the pressing member 53 is fixed to the left sidewall of the separating mechanism 4 by a bolt assembly 54.

The waste collecting apparatus shown in Fig. 7 includes a collecting body 1, a separating mechanism 4, a feeding pipe 2, and a liquid discharging pipe 3, the collecting body 1 has a receiving chamber 101, the separating mechanism 4 is a rotatable cylinder provided within the collecting body 1, and the sidewall of the cylinder is provided with a filtering structure 5, there are two feeding pipes 2 and the two feeding pipes are connected to the right sidewall of the collecting body 1 and are in communication with the receiving chamber 101, the liquid discharging pipe 3 is connected to the left sidewall of the collecting body 1 and is in communication with the receiving chamber 101.

The waste collecting apparatus shown in Fig. 8 is substantially the same as the structure of the waste collecting apparatus shown in Fig. 1, except that the waste collecting apparatus shown in Fig. 8 further includes a sealing member 12, the sealing member 12 includes a sealing ring 121 and pressing block 122, the pressing block 122 includes a locking base 1221 and a locking member 1222, the sealing ring 121 is provided at an inner wall of the collecting body 1, the locking base 1221 is provided on the collecting body 1, and the locking member 1222 is provided on the separating mechanism 4, a cooperation of the locking base 1221 with the locking member 1222 allows a fixation of the separating mechanism 4 onto the collecting body 1, and under an action of the sealing ring 121, the sealing contact of the separating mechanism 4 with the collecting body 1 is achieved.

Referring to Fig. 9, the workpiece processing system shown in Fig. 9 includes a liquid pumping device 6, a waste aggregating mechanism 7, a first drilling member 8, a second drilling member 9, a first water inlet pipe 10, a second water inlet pipe 11, and the waste collecting apparatus as shown in Fig. 1.

Herein, one end of the liquid pumping device 6 is connected to the liquid discharging pipe 3, and the other end is connected to a waste liquid collecting container 13, the waste aggregating mechanism 7 includes two waste aggregating pipes 701, wherein one of the two waste aggregating pipes 701 having one end in communication with one of the feeding pipes 2 and the other end in contact with a front face of the thin sheet workpiece to be drilled X, and the other aggregating pipe 701 having one end in contact with the other feeding pipe 2 and the other end in contact with a back face of the thin sheet workpiece to be drilled X.

The first water inlet pipe 10 is in communication with one of the waste aggregating pipe 701, and the first drilling member 8 is located within the waste aggregating pipe 701, and the second water inlet pipe 11 is in communication with the other waste aggregating pipe 701 and the second drilling member 9 is located in the waste aggregating pipe 701.

The above description is only illustrative embodiments of the present disclosure, and is not intended to limit the scope of the present disclosure, and any modifications, equivalents, improvements, etc., made within the spirit and principles of the present disclosure should be included within the scope of protection of the present disclosure.

### Industrial Applicability

In summary, the present disclosure provides a waste collecting apparatus and a workpiece processing system, which has a simple structure and low cost, and can effectively separate a liquid waste from a solid waste, thereby allowing effectively a reduction in labor intensity and an improvement of work efficiency.

## Claims

1. A waste collecting apparatus, **characterized by** comprising: a collecting body (1);
a feeding pipe (2) and a liquid discharging pipe (3) in communication with the collecting body (1); and
a separating mechanism (4) provided within the collecting body (1), with the separating mechanism (4) configured to be passed by a liquid waste and retain a solid waste.

2. The waste collecting apparatus according to claim 1, **characterized in that** the separating mechanism (4) comprises: a waste aggregating chamber (41) in communication with the feeding pipe (2) and configured to receive a waste; and
the filtering mechanism (4) is provided on a wall with a filtering structure (5) configured to be passed by a liquid waste and retain a solid waste.

3. The waste collecting apparatus according to claim 2, **characterized in that** the filtering structure (5) comprises: at least one hole (51) provided on a wall of the separating mechanism (4).

4. The waste collecting apparatus according to claim 2, **characterized in that** a first opening (42) is provided on a wall of the separating mechanism (4), and the filtering structure (5) comprises: a filter (52) provided within the first opening (42).

5. The waste collecting apparatus according to claim 4, **characterized in that** the filter (52) is fixed within the first opening (42) by a pressing member (53), the pressing member (53) is a ring sheet provided surrounding a circumference of the first opening (42), the pressing member (53) is configured to press the filter (52) onto the wall of the separating mechanism (4), and the pressing member (53) and the wall of the separating mechanism (4) are connected by a bolt assembly (54).

6. The waste collecting apparatus according to any one of claims 1 to 5, wherein the separating mechanism (4) is provided inside the collecting body (1) in a pulling-out manner.

7. The waste collecting apparatus according to claim 1, **characterized in that** the separating mechanism (4) is a filtering mesh (43) provided at a pipe orifice of the liquid discharging pipe (3) that is connected to the collecting body (1), and the filtering mesh (43) has a pore size smaller than a particle diameter of the solid waste, so that the liquid waste passes through the filtering mesh (43) and enters the liquid discharge pipe (3) to be discharged, and the solid waste is retained in the collecting body (1).

8. The waste collecting apparatus according to claim 1, **characterized in that** the separating mechanism (4) is a rotatable cylinder provided within the collecting body (1), and a filtering structure (5) is provided on a sidewall of the cylinder.

9. The waste collecting apparatus according to any one of claims 1 to 8, **characterized in that** the waste collecting apparatus further comprises a sealing member (12), and the sealing member (12) is configured to make the separating mechanism (4) in sealing contact with the collecting body (1).

10. The waste collecting apparatus according to claim 9, **characterized in that** the sealing member (12) comprises a sealing ring (121) and a pressing block (122), the sealing ring (121) is provided on an inner wall of the collecting body (1) and/or an outer wall of the separating mechanism (4), and the pressing block (122) is configured to fix the separating mechanism (4) for fixing the separating mechanism (4) onto the collecting body (1).

11. The waste collecting apparatus according to any one of claims 1 to 10, **characterized in that** the waste collecting apparatus further comprises: a liquid pumping device (6) in communication with the liquid discharging pipe (3).

12. The waste collecting apparatus according to any one of claims 1 to 11, **characterized in that** the feeding pipe (2) is provided at an upper portion of the collecting body (1), the liquid discharging pipe (3) is provided at a lower portion of the collecting body (1); or the feeding pipe (2) and the liquid discharging pipe (3) are provided at opposite sides of the collecting body (1).

13. A workpiece processing system, **characterized by** comprising the waste collecting apparatus according to any one of claims 1 to 12, preferably the workpiece processing system is a thin sheet workpiece drilling system.

14. The workpiece processing system according to claim 13, **characterized in that** the workpiece processing system further comprises: a waste aggregating mechanism (7) in communication with the collecting body (1) through the feeding pipe (2), with the waste aggregating mechanism (7) configured to collect a waste.

15. The workpiece processing system according to claim 14, **characterized in that** the waste aggregating mechanism (7) comprises: two waste aggregating pipes (701), the two waste aggregating pipes (701) having one end in communication with the feeding pipe (2), and the other end respectively in contact with a front face and a back face of the thin sheet workpiece to be drilled (X);
the workpiece processing system further comprises: a first drilling member (8) and a second drilling member (9) respectively located in the two waste aggregating pipes (701); and
a first water inlet pipe (10) and a second water inlet pipe (11) respectively in communication with the two waste aggregating pipes (701).
